# EUROPÄISCHE PATENTANMELDUNG

(11) **EP 3 626 444 A1**
(43) Veröffentlichungstag der Anmeldung: **25.03.2020**
(21) Anmeldenummer: 19197272.8
(22) Anmeldetag: 13.09.2019
(51) Int. Cl.: B32B 1/08, B29B 15/12, B29C 63/26, B29D 23/00, B32B 5/02, B32B 5/26, B32B 5/28, B32B 17/04, B32B 27/08, B32B 27/12, F16L 55/1645, F16L 55/18

(54) **SANIERUNG VON HOCHTEMPERATURLEITUNGEN**

(30) Priorität: 21.09.2018 DE 102018123339
(71) Anmelder: SAERTEX multiCom GmbH, 48369 Saerbeck (DE)
(72) Erfinder: Mersmann, Frank, 48369 Saerbeck (DE); Füchtjohann, Nils, 48268 Greven (DE)
(74) Vertreter: Freischem & Partner Patentanwälte mbB

(57) **Zusammenfassung**

Die Erfindung betrifft einen Hochtemperaturliner zum Sanieren von Hochtemperaturleitungen aus mehreren Schichten, eine sanierte Hochtemperaturleitung, die Verwendung des Hochtemperaturliners und ein Verfahren zum Sanieren von Hochtemperaturleitungen.

## Beschreibung

Die Erfindung betrifft einen Hochtemperaturliner aus mehreren Schichten beispielsweise zum Sanieren von Fernwärmeleitungen, eine sanierte Hochtemperaturleitung wie eine Fernwärmeleitung, die Verwendung des Hochtemperaturliners und ein Verfahren zum Sanieren von Hochtemperaturleitungen wie Fernwärmeleitungen.

Die Sanierung von Hochtemperaturleitungen war bislang nicht mit der herkömmlichen Linertechnologie möglich. Fernwärmeleitungen mussten zur Sanierung bisher in der Regel ausgegraben und ersetzt werden.

In Fernwärmeleitungen wird Wärme oft durch das Medium Wasser oder Wasserdampf transportiert.

US 2009 0107558 A1 beschreibt, dass ein Rohr um die Fernwärmeleitung selbst etwas größer sein kann, so dass die Fernwärmeleitung herausgezogen und ersetzt werden kann.

EP 3 062 010 A1 und JP 5538230 B2 beschreiben jeweils einen Liner, der auch angeblich für die Sanierung von Fernwärmeleitungen eingesetzt werden kann. Es wird allerdings keine Lösung vorgeschlagen, wie der dort jeweils beschriebene aushärtbare Liner für die aggressiven Bedingungen in Fernwärmeleitungen, geeignet ausgestaltet werden kann. Hier sind nämlich Eigenschaften wie Hydrolysebeständigkeit und Temperaturbeständigkeit wichtig, die in diesen Dokumenten nicht diskutiert werden.

DE 19608352 C1 schlägt einen Liner zur Sanierung von Fernwärmeleitungen vor, bei dem ein metallisches Rohr in den ausgehärteten Liner eingezogen wird.

WO 2009/153193 A1 beschreibt ein Diol für Pulverlacke. Diese Druckschrift wurde in der späteren Patentliteratur ausschließlich im Bereich Detergenzien und Reinigungsmittel zitiert.

WO 2017/061944 A1 beschreibt einen Liner zur Sanierung von Fernwärmeleitungen, bei dem keine Beschichtung der harzgetränkten Faserschicht vorgesehen ist.

Die Aufgabe der vorliegenden Erfindung besteht darin, eine Technologie bereitzustellen, mit der Hochtemperaturleitungen wie beispielsweise Fernwärmeleitungen unkompliziert und zuverlässig grabenlos saniert werden können.

Die der Erfindung zu Grunde liegende Aufgabe wird in einer ersten Ausführungsform durch einen Hochtemperaturliner aus mehreren Schichten gelöst, wobei eine Faserschicht Fasern enthält, die mit einer Harzzusammensetzung getränkt sind, wobei eine Innenbeschichtung oder ein feuchtigkeitsabweisender Schlauch, die in der sanierten Hochtemperaturleitung die abschließende Schicht in Richtung der Mittelachse der Hochtemperaturleitung bilden, eine Dicke in einem Bereich von 40 bis 2000 µm, vorzugsweise 50 bis 1000 µm, aufweisen.

Vorzugsweise enthält die Harzzusammensetzung einen ungesättigten Polyester (alternativ auch Vinylester), der aus der Polykondensation von ungesättigten Carbonsäureäuqivalenten mit Diolen und
a) wenigstens einem Diamin und/oder
b) wenigstens einem Dialkyl- oder Diaryl-Diol der allgemeinen Formel I 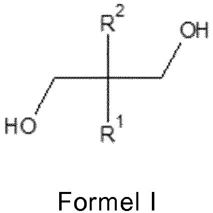 bei denen R¹ und R² Alkyl- oder Aryl- und gleich oder verschieden ist,
entsteht.

Durch diese ganz spezielle Auswahl an Materialien für das Harz und die Innenbeschichtung beziehungsweise den feuchtigkeitsabweisenden Schlauch (Materialien werden im Folgenden konkret benannt) des Hochtemperaturliners ist dieser Liner besser als die bisher bekannten Liner für Hochtemperaturleitungen wie beispielsweise Fernwärmeleitungen durch die erhöhte Temperaturbeständigkeit und die erhöhte Hydrolysebeständigkeit zu deren Sanierung geeignet.

Hochtemperaturliner im Sinne der Erfindung bezeichnet vorzugsweise einen Liner, der für eine Dauertemperaturbelastung in einem Bereich von 40 bis 250 °C, ganz besonders bevorzugt 50 bis 160 °C geeignet ist. Der Hochtemperaturliner ist vorzugsweise für eine Dauerdruckbelastung in einem Bereich von 2,5 bis 40 bar, besonders bevorzugt 10 bis 25 bar, geeignet.

### Genereller Aufbau des Hochtemperaturliners

Bei der Reihenfolge der Schichten des erfindungsgemäßen Liners geht diese Anmeldung von der Reihenfolge aus, die im sanierten oder zu sanierenden Rohr wie beispielsweise einem Fernwärmerohr vorhanden wäre. Der erfindungsgemäße Hochtemperaturliner weist eine Innenbeschichtung oder einen feuchtigkeitsabweisenden Schlauch auf. Die Innenbeschichtung oder der feuchtigkeitsabweisende Schlauch ist diejenige Schicht, die zur Rohrmitte hin die abschließende Schicht ist. Optional kann eine Außenschicht vorgesehen sein, die an der Grenzfläche zur Innenwand des zu sanierenden Rohres angeordnet ist. Zwischen Innenbeschichtung oder feuchtigkeitsabweisendem Schlauch und der Innenwand des zu sanierenden Rohres können verschiedene andere Schichten wie beispielsweise die wenigstens eine harzgetränkte Faserschicht angeordnet sein. Es ist bekannt, dass diese Schichten vor dem Einbau auch genau in umgekehrter Reihenfolge im verkaufsfertigen Produkt vorliegen können, da Rohre wie beispielsweise Fernwärmeleitungen auch mit dem Inversionsverfahren saniert werden können. Sie können allerdings im verkaufsfertigen Produkt auch in genau dieser Reihenfolge vorliegen, wenn die Rohre und vor allem Fernwärmeleitungen mit den Einzugsverfahren saniert werden.

Es sind verschiedene Varianten möglich, den Hochtemperaturliner konkret zu verwirklichen. Auf einige Varianten wird im Folgenden ohne Anspruch auf Vollständigkeit eingegangen. Es handelt sich um bevorzugte Ausführungsformen:

### Variante A

Beispielsweise kann die Innenbeschichtung eine Styrol-Sperr-Lage aufweisen. Die Innenbeschichtung kann dann vorzugsweise mit Hilfe einer Verankerungsschicht an der wenigstens einen Faserschicht verankert sein. Im ausgehärteten Zustand würden bei dieser Variante sowohl die Innenbeschichtung als auch die Styrol-Sperr-Lage (und ggf. eine Verankerungsschicht) in der sanierten Hochtemperaturleitung verbleiben.

### Variante B

Beispielsweise kann die Innenbeschichtung keine Styrol-Sperr-Lage aufweisen. Die Innenbeschichtung kann dann vorzugsweise mit Hilfe einer Verankerungsschicht an der wenigstens einer Faserschicht verankert sein. Für die Aushärtung des Hochtemperaturliners würde dann eine Schlauchfolie mit einer Styrol-Sperr-Lage als Installationshilfe vor der Aushärtung in dem auszuhärtenden Hochtemperaturliner angeordnet. Nach der Aushärtung würde diese Installationshilfe wieder entfernt werden. Alternativ kann auch ein feuchtigkeitsabweisender Schlauch mit Styrol-Sperr-Lage verwendet werden, der nach der Aushärtung im Liner verbleibt. Der Hochtemperaturliner in der sanierten Hochtemperaturleitung kann eine, muss aber dann keine, Styrol-Sperr-Lage nach innen aufweisen.

### Variante C

Der erfindungsgemäße Hochtemperaturliner kann auch erhalten werden, indem eine harzgetränkte Faserschicht mit Hilfe einer Schlauchfolie mit einer Styrol-Sperr-Lage als Installationshilfe ausgehärtet wird, diese dann nach der Aushärtung entfernt wird und anschließend ein feuchtigkeitsabweisender Schlauch eingezogen wird, um den erfindungsgemäßen Hochtemperaturliner zu erhalten. Alternativ kann auch direkt ein feuchtigkeitsabweisender Schlauch mit Styrol-Sperr-Lage verwendet werden, der nach der Aushärtung im Liner verbleibt.

### Variante D

Der erfindungsgemäße Hochtemperaturliner kann auch erhalten werden, indem vor der Aushärtung der harzgetränkten Faserschicht ein feuchtigkeitsabweisender Schlauch eingezogen wird, der eine Styrol-Sperr-Lage aufweist, der dann nach der Aushärtung in der sanierten Hochtemperaturleitung verbleibt, um den erfindungsgemäßen Hochtemperaturliner zu erhalten.

Die Innenbeschichtung oder der feuchtigkeitsabweisende Schlauch enthält vorzugsweise zu wenigstens 20 Gew.% ein Material ausgewählt aus der Gruppe Polyamid, EVOH, Polypropylen, Polymethylpenten, Polyethylen, vernetztes Polyethylen, Poly(organo)siloxane, Fluorpolymere, Fluorelastomere, Nitrilkautschuke, alipahtische Polyketone, Polyetherketone, Polyphenylensulfide, und/oder beliebige Mischungen derselben. Mischungen derselben können durch Blends aber auch durch verschiedene Lagen der Materialien erzeugt sein. Beispielsweise kann die Innenbeschichtung oder der feuchtigkeitsabweisende Schlauch auch wenigstens über 60 Gew.% von Mischungen dieser Materialien enthalten.

Zwischen der wenigstens einen harzgetränkten Faserschicht und der Innenbeschichtung kann vorzugsweise eine Verankerungsschicht angeordnet sein. Die Verankerungsschicht kann vorzugsweise mit der Innenbeschichtung stoffschlüssig (beispielsweise kaschiert) verbunden sein. Die Verankerungsschicht ist vorzugsweise nach der Aushärtung des Liners stoffschlüssig und / oder kraftschlüssig mit wenigstens einer Faserschicht verbunden.Die Verankerungsschicht kann ein Vlies, besonders bevorzugt ein Polymervlies sein. Vlies im Sinne der Erfindung umfasst auch Filz.

Alternativ kann ein feuchtigkeitsabweisender Schlauch eingesetzt werden, der nicht mit der wenigstens einen harzgetränkten Faserschicht verbunden ist. Der feuchtigkeitsabweisende Schlauch kann auch ein Schlauch oder eine Schlauchfolie sein, die im sanierten Rohr verbleibt.

Alternativ kann der feuchtigkeitsabweisende Schlauch auch nach Aushärtung des Liners als Schlauch oder Schlauchfolie in das zu sanierende Rohr eingeführt werden. Dies kann den Vorteil haben, dass ein Schlauch wie beispielsweise ein Silikonschlauch nachträglich eingeführt werden kann, um dann die ausgehärtete vormals harzgetränkte Faserschicht vor beispielsweise Wasserdampf und damit vor Hydrolyse zu schützen. Der feuchtigkeitsabweisende Schlauch ist dann in diesem Fall vorzugsweise nicht stoffschlüssig oder kraftschlüssig mit einer der übrigen Schichten verbunden. Der feuchtigkeitsabweisende Schlauch kann dann einfach durch den Innendruck eines Fernwärmemediums an eine der übrigen Schichten wie beispielsweise eine Faserschicht angepresst werden.

Vorzugsweise ist die Faserschicht des erfindungsgemäßen Hochtemperaturliners nicht aufgewickelt oder lose zusammengelegt. Dies hat den Vorteil, dass der Liner beispielsweise beim Einzug in das zu sanierende Rohr stabiler bleibt.

Die Installationshilfe ist vorzugsweise eine Schlauchfolie mit einer Styrol-Sperr-Lage. Diese kann die bevorzugten Eigenschaften haben, die weiter unten beschrieben sind. Die Installationshilfe kann beispielsweise eine Schlauchfolie aus einer Verbundfolie sein. Diese Verbundfolie kann beispielsweise wenigsten drei Lagen Polyolefin/Polyamid/Polyolefin aufweisen. Die Dicke der Installationshilfe kann beispielsweise in einem Bereich von 30 bis 200 µm liegen. Die Installationshilfe wird nach der Aushärtung der Harzzusammensetzung vorzugsweise aus dem Hochtemperaturliner entfernt. In der Verbundfolie kann zwischen den Lagen auch noch Haftvermittler angeordnet sein.

Der feuchtigkeitsabweisende Schlauch kann eine Wanddicke in einem Bereich von 50 bis 3000 µm haben. Der feuchtigkeitsabweisende Schlauch kann vorzugsweise Polyamid, EVOH, Polypropylen, Polymethylpenten, Polyethylen, vernetztes Polyethylen, Poly(organo)siloxan, Fluorpolymer, Fluorelastomer, Nitrilkautschuk, alipahtische Polyketon, Polyetherketon, Polyphenylensulfid, und/oder Mischungen derselben enthalten. Vorzugsweise enthält der feuchtigkeitsabweisende Schlauch diese Materialien oder Mischungen derselben zu 20 bis 100 Gew.%.

### Harzzusammensetzung

Die Harzzusammensetzung kann eine Polyester-, Polyurethan-, Epoxid- und/oder Vinylesterbasis haben.

Die Harzzusammensetzung enthält vorzugsweise Reaktivverdünner und ungesättigten Polyester, der aus einer Polyester-Ausgangsmischung erhältlich ist. Vorzugsweise enthält die Harzzusammensetzung 30 bis 60 Gew.%, ganz besonders bevorzugt 40 bis 50 Gew.%, Reaktivverdünner und 40 bis 70 Gew.%, ganz besonders bevorzugt 50 bis 60 Gew.%, ungesättigten Polyester. Vorzugsweise enthält die Harzzusammensetzung Reaktivverdünner und ungesättigten Polyester in einem Mengenverhältnis von 1:1,5 bis 1:1 Reaktivverdünner zu ungesättigtem Polyester.

Der Reaktivverdünner kann vorzugsweise ausgewählt sein aus der Gruppe Styrol, para-Methylstyrol, alpha-Methylstyrol, tert-Butylacrylat, Vinyltoluol, tert.-Butylstyrol, 4-Vinylpyridin, 3-Vinylpyridin, 2-Vinylpyridin, Methylmethacrylat, Divinylbenzol, 1,2,4-Trivinylcyclohexan, Diallylphthalat, Diallylisophthalat, Trisallylisocyanurat und/oder Mischungen derselben. Ganz besonders bevorzugt ist der Reaktivverdünner Styrol.

Die Harzzusammensetzung enthält vorzugsweise 0,1 bis 3 Gew.% Photoinitiator. Dabei kann es sich auch vorzugsweise um eine Mischung von Photoinitiatoren handeln.

Die Harzzusammensetzung enthält vorzugsweise 1 bis 10 Gew.% Verdicker. Der Verdicker kann organisch oder anorganisch sein. Der Verdicker kann vorzugsweise ausgewählt sein aus Erdalkalimetalloxiden, Erdalkalimetallhydroxiden, aliphatischen Polyisocyanaten und/oder Mischungen derselben.

Die Harzzusammensetzung kann beispielsweise auch 0,4 bis 2,5 Gew.%, ganz besonders bevorzugt 0,5 bis 1,5 Gew.% peroxidischen Initiator enthalten. Der peroxidische Initiator kann beispielsweise 1,1-bis(tert.-butylperoxy)-3,3,5-trimethylcyclohexan sein.

Beispielweise ist die Harzzusammensetzung erhältlich durch Verdünnen des ungesättigten Polyesters mit Reaktivverdünner und Zugabe von Photoinitiator, Verdicker und peroxidischem Initiator. Vorzugsweise ist die Harzzusammensetzung erhältlich durch Verdünnen des ungesättigten Polyesters mit Reaktivverdünner und Zugabe von Photoinitiator und Verdicker.

Vorzugsweise liegen je Doppelbindung im ungesättigten Polyesterharz 1,4 bis 4, besonders bevorzugt 2 bis 2,5, Moleküle des Reaktivverdünners in der Harzzusammensetzung vor.

Die Harzzusammensetzung hat vorzugsweise eine Dichte in einem Bereich von 1,01 g/cm³ bis 1,26 g/cm³ ohne Füllstoffe.

Die Harzzusammensetzung kann vorzugsweise auch 5 bis 40 Gew.%, ganz besonders bevorzugt 20 bis 30 Gew.% anorganische Füllstoffe enthalten. Diese Füllstoffe können beispielsweise Metalloxide wie beispielsweise Aluminiumoxid sein. Die Füllstoffe können beispielsweise als Pulver oder Granulat vorliegen.

### Ungesättigter Polyester

Vorzugsweise enthält die Harzzusammensetzung neben anderen Bestandteilen einen Polyester (besonders bevorzugt einen ungesättigten Polyester), der aus einer Polyester-Ausgangsmischung erhalten wurde, also einer Mischung aus der durch Aushärtung ein Polyester bzw. Derivate (wie beispielsweise Polyesteramid) entstehen kann.

Der ungesättigte Polyester ist vorzugsweise erhältlich aus einer Polyester-Ausgangsmischung in einer Polykondensationsreaktion. Vorzugsweise ist der ungesättigte Polyester ein ungesättigtes Polyesteramid.

Der ungesättigte Polyester, der bei Raumtemperatur oft fest oder halbfest ist, wird beispielsweise durch Polykondensation in der Schmelze aus Dicarbonsäuren und Anhydriden, welche wenigstens teilweise mit einer radikalisch reaktiven Doppelbindung funktionalisiert sind, sowie Diolen hergestellt. Nach Abmischen des ungesättigten Polyesters mit dem Reaktivverdünner erhält man beispielsweise ein bei Raumtemperatur meist flüssiges Harz, das als ungesättigtes Polyesterharz (UP-Harz) bezeichnet wird. Nach der radikalischen Härtung (chemische Vernetzung) des UP-Harzes spricht man vom UP-Duromer oder UP-Netzwerk. Nach der Polykondensation von einerseits Dicarbonsäure und/oder Anhydrid und andererseits Diol liegt der ungesättigte Polyester beispielsweise als eine Mischung von Polymer, Oligomer und restlichem Monomer entsprechend der jeweiligen Molmassenverteilung vor.

Die folgenden Gew.% Angaben in diesem Abschnitt beziehen sich immer auf 100 Gew.% Polyester-Ausgangsmischung.

Diese Polyester-Ausgangsmischung enthält vorzugsweise 40 bis 60 Gew.%, ganz besonders bevorzugt 45 bis 55 Gew.% ungesättigte Carbonsäureäuqivalente. Die Carbonsäureäquivalente können ausgewählt sein aus Carbonsäuren mit 2 oder 3 Säuregruppen, deren Anhydriden und/oder beliebigen Mischungen derselben. Die Carbonsäureäquivalente können vorzugsweise ausgewählt sein aus Fumarsäure, Trimellitsäureanhydrid (TMA), Phthalsäureanhydrid, Maleinsäureanhydrid, Isophthalsäure und/oder beliebigen Mischungen derselben.

Vorzugsweise liegt das Molverhältnis von Anhydrid zu Carbonsäure in einem Bereich von 1,1:1 bis 1,6:1.

Diese Polyester-Ausgangsmischung enthält vorzugsweise 40 bis 60 Gew.%, ganz besonders bevorzugt 45 bis 55 Gew.% Diamine und/oder Diole.

Die Diamine können vorzugsweise Cycloalkan-Diamine sein. Ganz besonders bevorzugt ist das Cycloalkan-Diamin Isophorondiamin. Die Diamine können vorzugsweise in einer Menge in einem Bereich von 10 bis 20 Gew.% in der Polyester-Ausgangsmischung enthalten sein.

Die Diole können vorzugsweise Cycloalkan-Diole sein. Diese Cycloalkan-basierten Diole können vorzugsweise in einer Menge in einem Bereich von 20 bis 35 Gew.% in der Polyester-Ausgangsmischung enthalten sein. Die Cycloalkan-basierten Diole können vorzugsweise ausgewählt sein aus der Gruppe Cyclohexandimethanol, Isosorbid, und/oder Mischungen derselben.

Die Diole können vorzugsweise auch Dialkyl- oder Diaryl-Diole der allgemeinen Formel I sein: 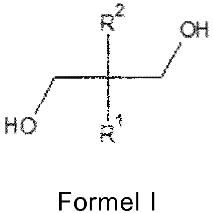 wobei R¹ und R² Alkyl- oder Arlyreste und gleich oder verschieden sein können. Diese Diole können vorzugsweise in einer Menge in einem Bereich von 10 bis 30 Gew.% in der Polyester-Ausgangsmischung enthalten sein.

Der Rest R¹ und/oder R² ist vorzugsweise ausgewählt aus Methyl-, Ethyl-, n-Propyl-, i-Propyl-, n-Butyl-, i-Butyl-, n-Pentyl-, 2-Methylbutyl-, 3-Metylbutyl-, Phenyl- und/oder Kombinationen hiervon. Ganz besonders bevorzugt ist R¹ Methyl-.

Vorzugsweise können die Diole 10 - 30 Gew.% Neopentylglykol bezogen auf die Polyester-Ausgangsmischung enthalten.

Vorzugsweise können die Diole 10 - 30 Gew.% der oben definierten Dialkyl- oder Diaryl-Diole enthalten.

Vorzugsweise sind in der Polyester-Ausgangsmischung 10 bis 20 Gew.% Dialykl- oder Diaryl-Diole der allgemeinen Formel I, 20 bis 35 Gew.% Cycloalkan-Diole und 10 bis 20 Gew.% Cycloalkan-Diamine enthalten.

Vorzugsweise kann das Gewichtsverhältnis zwischen Diolen und Diaminen in der Polyester-Ausgangsmischung in einem Bereich von 3:1 bis 25:1 liegen.

Vorzugsweise kann das Molverhältnis zwischen Diolen und Diaminen in der Polyester-Ausgangsmischung in einem Bereich von 4:1 bis 20:1 liegen.

Vorzugsweise liegt das Molverhältnis zwischen einerseits Carbonsäureäquivalenten und andererseits Diolen und/oder Diaminen in der Polyester-Ausgangsmischung in einem Bereich von 1,5:1 bis 4:1.Die Diole können auch folgende Diole enthalten: Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,5-Hexadien-3,4-diol, 1,2- und 1,3-Cyclopentandiol, 1,2-, 1,3- und 1,4-Cyclohexandiol, 1,1-, 1,2-, 1,3- und 1,4-Bis-(Hydroxymethyl)cyclohexan, 1,1-, 1,2-, 1,3- und 1,4-Bis(Hydroxyethyl)cyclohexan, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Diethylenglykol, Triethylenglykol, Dipropylenglykol, Tripropylenglykol, Polyethylen-polypropylenglykol, wobei die Abfolge der Ethylenoxid- der Propylenoxid-Einheiten blockweise oder statistisch sein kann, oder Gemische von zwei oder mehr Vertretern der voranstehenden Verbindungen. Dabei kann eine oder auch beide Hydroxylgruppen in den vorstehend genannten Diolen durch SH-Gruppen substituiert werden.

Das molare Verhältnis zwischen einerseits Carbonsäureäquivalent und andererseits Diol liegt vorzugsweise in einem Bereich von 0,9:1 bis 1:0,9, besonders bevorzugt von 1,03:1 bis 0,97:1, um ungesättigte Polyester mit optimaler Molmasse herzustellen. Auftretende Nebenreaktionen, die zur Bildung flüchtiger Nebenprodukte führen, können darüber hinaus die erforderliche Stöchiometrie stark beeinflussen. Zum Beispiel bei Verwendung von Butandiol-1,4 ist dies die Bildung von Tetrahydrofuran; bei Verwendung von 1,2-Propylenglykol ist es die Bildung von 2-Ethyl-4-methyl-1,3-dioxolan. Beide Nebenreaktionen können bewirken, dass ein deutlicher Überschuss bei der Kondensation erforderlich wird. Im Fall von 1,2-Propylenglykol sind dies vorzugsweise 7-15 mol-%, im Fall von 1,4-Butandiol vorzugsweise etwa 30 mol-%.

Die Polyester-Ausgangsmischung enthält vorzugsweise 0,01 bis 0,1 Gew.% Inhibitor. Der Inhibitor kann vorzugsweise ausgewählt sein aus der Gruppe Hydrochinon, Toluolhydrochinon, 4-tert-Butylhydrochinon, 4-tert-Butylbrenzcatechin, Naphtochinon, 1,2-Dihydroxynaphathalin, 1,4-Dihydroxynaphthalin und/oder Mischungen derselben.

Die Polyester-Ausgangsmischung enthält vorzugsweise 0,01 bis 0,1 Gew.% Katalysator. Der Katalysator ist vorzugsweise ein Katalysator für Veresterung. Der Katalysator kann beispielsweise hydriertes Butylzinnsäure sein.

Die Polyester-Ausgangsmischung enthält vorzugsweise (i) eine ungesättigte Dicarbonsäure, einen Ester oder ein Anhydrid davon, (ii) aliphatisches Diol, (iii) Dianhydrohexit (iv) cycloaliphatisches Diol oder aromatisches Diol und (v) ein Amid-bildendes Mittel.

Vorzugsweise umfasst hierbei (i) (nämlich ungesättigte Dicarbonsäure, ein Ester oder ein Anhydrid davon) Maleinsäure, Fumarsäure, Itaconsäure, Mesaconsäure, Citraconsäure, Zitronensäuren und/oder Maleinsäureanhydrid, Ester oder Anhydride der vorgenannten Carbonsäuren, oder beliebige Mischungen derselben.

Vorzugsweise umfasst (ii) (also aliphatisches Diol) 1,4-Butandiol, 2-(2-Hydroxyethoxy)ethan-1-ol, 3-(3-Hydroxypropoxy)propan-1-ol, 2,2-Dimethylpropan-1,3-diol, 2-Ethyl-2-methylpropan-1,3-diol, 2-Butyl-2-ethylpropan-1,3-diol, 3-Hydroxy-2,2-dimethylpropyl-3-hydroxy-2,2-dimethylpropionat, Ethan-1,2-diol, Propan-1,2-diol, 4-Oxa-2,6-heptandiol, 2-(2-Hydroxy-propoxy)-propan-1-ol, 2-(2-Hydroxy-1-methyl-ethoxy)-propan-1-ol (Dipropylenglykol oder DPG), oder beliebige Mischungen derselben.

Vorzugsweise umfasst (iii) (also Dianhydrohexitol) 1,4:3,6 Dianhydrohexitol.

Vorzugsweise umfasst (iv) (also cycloaliphatisches Diol oder aromatisches Diol) 2,2-Diphenyl-Propandiol-1,3, Cyclohexandimethanol und/oder Tricyclododecandimethanol.

Vorzugsweise ist das amidbildende Mittel (v) ausgewählt aus 1,4-Diaminobutan, 1,5-Diaminopentan, 1,6-Diaminhexan, 2,2,4-Trimethylhexan-1,6-Diamin, 2,4,4-Trimethylhexan-1,6-Diamin, 2-(2-Aminoethoxy)ethylamin (Diaminoglykol), 1,3-Diaminomethylcyclohexan, 1,4-Diaminomethylcyclohexan, 1,3-Diamino-2-methylcyclohexan, 1,3-Diamino-4-methylcyclohexan, 4-(2-Aminopropan-2-yl)-1-methylcyclohexanamin (1,8-Diaminomittel), 3-Aminomethyl-3,5,5-Trimethylcyclohexylamin (Isophorondiamin oder IPDA), Bicycloheptandimethylamin (Bis(aminomethyl) norbonan), Tricyclodecandimethylamin (auch als TCD-DA bezeichnet), 4,4'-Methylen(cyclohexylamin), 4,4' Di(aminocyclohexyl)methan oder Dicykan bzw. Pacm), 4,4'-Diamino-3,3'-Dimethylcyclohexylmethan (Dimethylcykan), 1,3-Bis-(aminomethyl)benzol, 1,4-Bis-(aminomethyl)benzol und 6-Phenyl-1,3,5-triazin-2,4-diamin (benzoguanamin) oder beliebigen Mischungen derselben.

Vorzugsweise umfasst die Polyester-Ausgangsmischung
(i) 45 bis 55 Mol-% ungesättigte Dicarbonsäure, ein Ester oder ein Anhydrid davon;
(ii) 4 bis 39 Mol-% aliphatisches Diol;
(iii) 2 bis 31 Mol-% Dianhydrohexitol;
(iv) 2 bis 31 Mol-% cycloaliphatisches Diol oder ein aromatisches Diol; und
(v) 1 bis 22 Mol-% eines Amidbildners.

Vorzugsweise ist das Polyesteramid aus einer Polyester-Ausgangsmischung mit wenigstens einem dieser bevorzugten Merkmale durch Polykondensation entstanden.

Während der Kondensationsreaktion wird das entstehende Wasser vorzugsweise entfernt.

Bei der Aushärtung eines Hochtemperaturliners mit einem oder mehreren dieser bevorzugt gestalteten Merkmale der Harzzusammensetzung und/oder mit einem oder mehreren dieser bevorzugt gestalteten Merkmale der Polyester-Ausgangsmischung konnten besonders hydrolysebeständige und thermisch beständige Hochtemperaturliner erhalten werden.

### Innenbeschichtung oder feuchtigkeitsabweisender Schlauch

Die Innenbeschichtung oder der feuchtigkeitsabweisende Schlauch kann vorzugsweise eine Dicke in einem Bereich von 50 bis 1000 µm, ganz besonders bevorzugt 100 bis 700 µm aufweisen. Die Innenbeschichtung oder der feuchtigkeitsabweisende Schlauch kann vorzugsweise aus einer oder mehreren Lagen aufgebaut sein.

Wenigstens eine der Lagen kann zu wenigstens 20 Gew.%, vorzugsweise wenigstens 90 Gew.%, ein Material ausgewählt aus der Gruppe Silikon (bzw. Poly(organo)siloxan), Polypropylen, Polymethylpenten, Polyethylen, vernetztes Polyethylen, Poly(organo)siloxane, Fluorpolymere, Fluorelastomere, Nitrilkautschuke, alipahtische Polyketone, Polyetherketone, Polyphenylensulfide, und/oder Mischungen derselben enthalten. Diese Lage weist vorzugsweise eine Dicke in einem Bereich von 10 bis 250 µm auf. Diese Lage wird im Folgenden auch Schutzlage genannt. Vorzugsweise kann eine Lage aus diesen Materialien bestehen. Mischungen derselben können durch Blends der Materialien erzeugt sein. Beispielsweise kann eine Lage auch wenigstens über 60 Gew.% von Mischungen dieser Materialien enthalten. Beispielsweise kann die Innenbeschichtung zu wenigstens über 60 Gew.% diese Materialien oder beliebige Mischungen derselben enthalten.

Die Fluorpolymere in den vorhergehenden Abschnitten können vorzugsweise ausgewählt sein aus PVDF, ETFE, PFA, PTFE, PVF und/oder Mischungen und/oder Copolymeren derselben.

Nitrilkautschuk (NBR) kann vorzugsweise hydrierter Nitrilkautschuk (H-NBR) sein.

Die aliphatischen Polyketone können vorzugsweise Carilon, Poketone oder Mischungen und/oder Copolymere derselben sein.

Polyetherketon kann vorzugsweise ausgewählt sein aus PEK, PEKK, PEEK, PEEKK, PEKEKK und/oder Mischungen und/oder Copolymere derselben.

Auf der Innenbeschichtung oder dem feuchtigkeitsabweisenden Schlauch kann optional auf der zum Rohrinneren zeigenden Seite (also der von der Faserschicht abgewandten Seite) eine Nutzlage angeordnet sein. Diese Nutzlage dient dazu, dass beim Einbau und/oder Betrieb die übrigen Lagen nicht beschädigt werden. Diese Nutzlage kann aus einem Polymer, insbesondere überwiegend ein Polymer wie beispielsweise Polypropylen, Polyester, Polyvinylchlorid, Polyurethan, Polycarbonat, Polymethylpenten, Polyethylen, vernetztes Polyethylen, Poly(organo)siloxane, Polyvinylidenfluorid (PVDF), Fluorpolymere, Fluorelastomere, Nitrilkautschuke, aliphatische Polyketone, Polyetherketone, Polyphenylensulfide, und/oder Mischungen derselben enthalten, besonders bevorzugt daraus bestehen. Dieses Polymer kann auch gewebeverstärkt sein. Beispielsweise kann es sich um eine gewebeverstärkte PVC-Folie handeln. Die Nutzlage kann eine Dicke in einem Bereich von 30 bis 200 µm aufweisen.

Die Innenbeschichtung oder der feuchtigkeitsabweisende Schlauch kann vorzugsweise auch eine Styrol-Sperr-Lage aufweisen. Diese kann vorzugsweise eine Dicke in einem Bereich von 5 bis 100 µm, besonders bevorzugt eine Dicke in einem Bereich von 10 bis 40 µm aufweisen. Die Styrol-Sperr-Lage kann beispielsweise eine Folie aus Polyamid, EVOH oder einem Polyamid-Copolymer sein oder enthalten. Diese Folie kann beispielsweise eine Dicke in einem Bereich von 5 bis 60 µm aufweisen. Diese Lage kann auch Bestandteil einer Verbundfolie aus PE/PA/PE, PP/PA/PP, P4M1P/PA/P4M1P (Polymethylpenten, z.B. Poly(4-methyl-1-penten)), PE-X/PA/PE-X (PE-X = vernetztes Polyethylen) sein. Zwischen den Lagen der Verbundfolie kann auch noch Haftvermittler angeordnet sein.

Der feuchtigkeitsabweisende Schlauch kann also beispielsweise ein Silikonschlauch sein, der in den ausgehärteten Liner eingezogen ist. Dieser liegt dann durch den hohen Druck in der Hochtemperaturleitung wie beispielsweise einer Fernwärmeleitung an den ausgehärteten Liner an. Dieses Prinzip gilt vorzugsweise natürlich auch für alle anderen Materialien des_feuchtigkeitsabweisenden Schlauchs.

Die Innenbeschichtung kann aber auch beispielsweise aus einer Schicht Polyetherketon bestehen, auf die ein Vlies aus Polypropylen als Verankerungsschicht aufkaschiert ist und die dann vor der Aushärtung des Liners auf der harzgetränkten Faserschicht auf der Innenseite des Liners mit der Verankerungsschicht anliegt. Wenn dann das Harz ausgehärtet wird, dann wird eine gewisse Menge Harz auch die Verankerungsschicht durchdrungen haben und damit nach der Aushärtung die Innenbeschichtung aus Polyetherketon stoffschlüssig mit der Faserschicht verbunden haben. Dieses Prinzip gilt natürlich auch für alle anderen vorgenannten Materialien und Materialkombinationen für die Verankerungsschicht bzw. die Innenbeschichtung.

Die Innenbeschichtung oder der feuchtigkeitsabweisende Schlauch weist beispielsweise einen Überlappungsbereich der Innenbeschichtung oder der feuchtigkeitsabweisende Schlauch mit sich selbst auf. Dieser Überlappungsbereich kann in einem Bereich von 5 bis 20 mm liegen. Damit kann im Unterschied zu einer Stoßfuge besonders gut sichergestellt werden, dass im Bereich der Überlappung beispielsweise kein Wasserdampf aus der Hochtemperaturleitung zum ausgehärteten Harz gelangt. Hierzu kann auch ein Tape auf der Fuge (Stoßfuge oder Überlappungsbereich) verwendet werden.

Die Innenbeschichtung oder der feuchtigkeitsabweisende Schlauch ist vorzugsweise dampfundurchlässig ausgestaltet, so dass also kein Wasserdampf aus der Hochtemperaturleitung zum ausgehärteten Harz gelangt.

Die Innenbeschichtung oder der feuchtigkeitsabweisende Schlauch ist vorzugsweise durchlässig für UV-Strahlung. Dies hat den Vorteil, dass die Harzzusammensetzung mit UV Licht ausgehärtet werden kann.

Die Styrol-Sperr-Lage kann mit der Schutzlage auch in Verbundfolien kombiniert sein. So kann diese Verbundfolie vorzugsweise aus Polyamid oder EVOH als Sandwich zwischen zwei Lagen der Materialien Polypropylen, Polymethylpenten, Polyethylen, Vernetztes Polyethylen,Poly(organo)siloxane, Fluorpolymere, Fluorelastomere, Nitrilkautschuke, aliphatische Polyketone, Polyetherketone, Polyphenylensulfide, und/oder Mischungen und/oder Kombinationen davon realisiert sein. Eine solche Verbundfolie kann vorzugsweise eine Dicke in einem Bereich von 50 bis 200 µm aufweisen. Die Innenbeschichtung oder der feuchtigkeitsabweisende Schlauch kann vorzugsweise aus einer solchen Verbundfolie bestehen. Zwischen den Lagen der Verbundfolie kann auch Haftvermittler angeordnet sein.

Beispielsweise können auch Verbundfolien wie (NBR oder H-NBR) / PA / (NBR oder H-NBR) oder Carilon / PA / Carilon eingesetzt werden.

Die Innenbeschichtung kann auch eine Metallfolie aufweisen. Diese kann beispielsweise eine Dicke in einem Bereich von 10 bis 100 µm aufweisen.

Auf der der Faserschicht und/oder der Verankerungsschicht zugewandten Seite kann die Innenbeschichtung oder der feuchtigkeitsabweisende Schlauch vorzugsweise eine Lage Polymer aufweisen. Dieses Polymer ist vorzugsweise ausgewählt aus Polypropylen, Polyester, Polyvinylchlorid, Polyurethan, Polycarbonat, Polymethylpenten, Polyethylen, vernetztes Polyethylen, Poly(organo)siloxane, Fluorpolymere, Fluorelastomere, Nitrilkautschuke, aliphatische Polyketone, Polyetherketone, Polyphenylensulfide, und/oder Mischungen derselben. Besonders bevorzugt ist das Polymer dieser Lage identisch mit dem Polymer der Verankerungsschicht bei Verwendung einer Innenbeschichtung. Diese Lage kann vorzugsweise eine Dicke in einem Bereich von 20 bis 150 µm aufweisen. Durch diese Lage kann beispielsweise die Verankerungsschicht besonders zuverlässig mit der Innenbeschichtung verbunden werden.

### Faserschicht

Die Fasern der Faserschicht sind vorzugsweise Glasfasern.

Die wenigstens eine Faserschicht kann vorzugsweise eine Dicke in einem Bereich von 2 bis 30 mm aufweisen.

Die Faserschlauchschicht ist vorzugsweise ein Gelege, ein Gewebe, eine Matte, ein Gestrick, ein Vlies, ein Filz, ein Gewirke oder eine Kombination oder ein mehrlagiger Aufbau dieser textilen Flächengebilde. Das Material der Fasern der harzgetränkten Faserschlauchschicht ist vorzugsweise ausgewählt aus Glas, Carbon, Aramid, gelgesponnenem Polyethylen (beispielsweise Dyneema ®), PAN, thermoplastischem Polymer oder Mischungen derselben. Thermoplastische Fasern können beispielsweise aus Polypropylen, Polyethylen oder Polyester sein. Das Material für das Harz kann vorzugsweise wie oben näher beschrieben ausgestaltet sein.

Das Fasermaterial der wenigstens einen Faserschicht enthält vorzugsweise wenigstens 90 Gew.% Glasfasern bezogen auf das Gewicht des Fasermaterials. Alternativ kann aber auch bevorzugt sein, dass die Faserschicht wenigstens 60 Gew.% thermoplastische Polymerfasern und weniger als 40 Gew.% Glasfasern bezogen auf das Gewicht des Fasermaterials enthält.

Vorzugsweise ist die wenigstens eine Faserschicht aus einer an den Längskanten verbundenen und dadurch einen Schlauch bildenden Faserlage gebildet. Vorzugsweise weist die wenigstens eine Faserschicht deshalb eine Längsnaht auf. Diese Längsnaht ist vorzugsweise eine mit Fäden (beispielsweise Polyestergarn oder Zwirn) genähte Naht. Eine Überlappung mit sich selbst weist die Faserschicht bzw. Faserlage daher beispielsweise nicht auf. Dadurch kann eine Überlappung der Faserschicht bzw. Faserlage mit sich selbst vermieden werden. Dies sorgt für eine wesentlich höhere Dickenkonformität der Faserschicht.

Der erfindungsgemäße Hochtemperaturliner kann vorzugsweise auch 2 bis 20, besonders bevorzugt 3 bis 12, Faserschichten enthalten. Diese Schichten sind im imprägnierten Zustand vorzugsweise relativ zueinander bewegbar und nicht miteinander fest verbunden oder gar vernäht. Dies hat den Vorteil, dass sie sich beim Installieren den Defekten in der zu sanierenden Hochtemperaturleitung wie beispielsweise einer Fernwärmeleitung optimal anpassen können.

### Verankerungsschicht

Zwischen der Innenbeschichtung und der Faserschicht kann eine Verankerungsschicht angeordnet sein. Die bevorzugt vorgesehene Verankerungsschicht, die vorzugsweise aus einem Polymermaterial besteht, weist wiederum vorzugsweise eine Dicke in einem Bereich von 10 bis 5000 µm, insbesondere 30 bis 500 µm auf. Alternativ bevorzugt kann die Dicke auch in einem Bereich von 800 und 3000 µm liegen. Die Verankerungsschicht enthält vorzugweise ein, insbesondere besteht vorzugsweise aus einem, Vlies oder einem Schmelzklebstoff oder einer Kombination dieser Varianten. Ganz besonders bevorzugt besteht das Vlies aus Glas, thermoplastischen Materialien, PAN, Metall, Carbonfasern oder Mischungen derselben. Die thermoplastischen Materialien sind beispielsweise ausgewählt aus Polyethylen, Polypropylen oder Polyester. Der Schmelzklebstoff ist beispielsweise Polyamid, Polyethylen, APAO (amorphes Polyolefin), EVAC (Ethylenvinylacetat-Copolymer), TPE-E (Polyester-Elastomer), TPE-U (Polyurethan-Elastomer), TPE-A (Copolyamid-Elastomer) oder Vinylpyrrolidon/Vinylacetat-Copolymer, sowie Mischungen derselben.

### Außenschicht

Die Außenschicht weist vorzugsweise eine Dicke in einem Bereich von 40 bis 2000 µm auf. Die Außenschicht ist vorteilhafterweise nicht für UV Strahlung durchlässig, damit das Harz in der harzgetränkten Faserschlauchschicht nicht beispielsweise bei der Lagerung oder beim Transport aushärtet. Die Außenschicht kann beispielsweise aus Polymer oder auch aus einem Vlies mit aufkaschiertem Polymer bestehen. Als Material für Polymer oder Vlies kommen beispielsweise PVC, Polyethylen oder Polypropylen in Frage. Diese Schicht kann auch faserverstärkt sein.

Die Außenschicht kann aus mehreren Lagen bestehen. Die Außenschicht kann vorzugsweise ebenfalls eine Styrol-Sperr-Lage aufweisen. Diese kann die bereits oben beschriebenen bevorzugten Eigenschaften aufweisen. Diese Styrol-Sperr-Lage oder eine angrenzende Lage kann auch mit einem Vlies verbunden sein (z.B. aufkaschiert sein). Die Außenschicht kann auch eine faserverstärkte Polymerschicht enthalten (beispielsweise gewebeverstärktes PVC).

### Weitere Ausführungsformen

In einer weiteren Ausführungsform wird die der Erfindung zu Grunde liegende Aufgabe durch eine sanierte Hochtemperaturleitung (wie beispielsweise einer Fernwärmeleitung) gelöst, dadurch gekennzeichnet, dass in der Hochtemperaturleitung ein erfindungsgemäßer ausgehärteter Hochtemperaturliner angeordnet ist.

In einer weiteren Ausführungsform wird die der Erfindung zu Grunde liegende Aufgabe durch die Verwendung des erfindungsgemäßen Hochtemperaturliners zur Sanierung von Hochtemperaturleitungen (wie beispielsweise Fernwärmeleitungen) gelöst.

In einer weiteren Ausführungsform wird die der Erfindung zu Grunde liegende Aufgabe durch ein Verfahren zum Sanieren von Hochtemperaturleitungen gelöst, dadurch gekennzeichnet, dass ein erfindungsgemäßer Hochtemperaturliner in eine Hochtemperaturleitung (wie beispielsweise einer Fernwärmeleitung) eingebracht wird und dort ausgehärtet wird. Dieses Verfahren kann beispielsweise nach einer der vorgenannten Varianten A bis D durchgeführt werden.

### Ausführungsbeispiel

Kondensation von ungesättigtem Polyesterharz:
Zur Herstellung des ungesättigten Polyesterharzes wurden 812,67 g Neopentylglykol, 759,87 g Isosorbid, 442,91 g Isophorondiamin, 38,34 g Maleinsäureanhydrid, 116,36 g Phthalsäureanhydrid, 224,80 g Trimellitsäureanhydrid, 2 g Hydrochinon, 1,8 g hydriertes Monobutylzinnoxid, 1969,46 g Fumarsäure und 618,90 g Cyclohexandimethanol in einen 6 l Vierhalskolben einer Kondensationsapparatur eingewogen und unter ständigem Rühren und kontinuierlichem Stickstoffstrom (20 l/h) innerhalb von 2 h auf 140 °C erwärmt und 55 min. unter beginnender Wasserabscheidung bei 140 °C gehalten. Anschließend wurde die Reaktionstemperatur mit einer Heizrate von etwa 10 K/h auf 170 °C erhöht, wobei alle 10 K eine Pause von 1h eingelegt wurde und die Temperatur jeweils konstant gehalten wurde, und anschließend auf RT abgekühlt. Am nächsten Tag wurde der Reaktionsansatz innerhalb von etwa 210 min gleichmäßig auf 170 °C erwärmt. Anschließend wurde die Temperatur mit 12 K/h auf 200 °C erhöht und unter weiterer Wasserabscheidung für 4h bei 200 °C für die Nachkondensation gehalten. Daran gefolgt wurde der Polyester durch Ausschalten der Temperierung auf Raumtemperatur abgekühlt. Das entstandene Polyesteramid war fest.

Die durch Titration ermittelte Säurezahl betrug 20 mg KOH/g UP.

### Herstellung der Harzzusammensetzung:

Zur Harzherstellung wurden 56 g des zuvor hergestellten ungesättigtem Polyesterharzes und 44 g Styrol in einen Einhalskolben aus Braunglas gegeben und bis zum vollständigen Lösen des ungesättigten Polyesters gerührt. Dies konnte einige Tage dauern. Danach wurden 2,1 g DESMODUR XP2675 von Covestro (Hexamethylendiisocyanat, HDI-Trimere), 0,25 g Diphenyl(2,4,6-trimethylbenzoyl)phosphin-oxid, 0,075 g 2-Methyl-4'-(methylthio)-2-morpholinopropiophenon, 1,2 g 1,1-bis(tert.-butylperoxy)3,3,5-trimethylcyclohexan zugegeben und verrührt. Diese Zusammensetzung wurde in Braunglasflaschen aufgehoben.

Diese Prozedur wurde so lange wiederholt, bis genügend Harzzusammensetzung für die folgenden Versuche vorhanden war. Die Härter bzw. Eindickmittel wurden erst ganz zum Schluss zugefügt.

### Liner Prototypen:

Zur Entwicklung eines Liner-Prototypen für Hochtemperatur-Anwendungen wurde Liner-Trockenware der Fa. Saertex multiCom genutzt (Typ: DN/WD 200/4, Stücknummer 10189045). Diese bestand aus zwei Glasgelegen (Innenliner und Außenliner), die nicht miteinander verbunden wurden und einen Schlauch bildeten. Die Gelege lagen so übereinander, dass die jeweiligen Grundketten parallel zur Rohrachse wiesen. Im Inneren der Liner-Trockenware war eine Innenbeschichtung mit Styrol-Sperr-Lage, welche die innere Oberfläche des Liners bildet.. Diese wird bei der Installation im Rohr mit Druckluft aufgeblasen und der Liner dadurch an die Wandung des Altrohres oder in eine Stützkappe gepresst.

Aus der Trockenware (Typ: DN/WD 200/4) wurden runde Probekörper mit einem Durchmesser von ca. 10 cm ausgeschnitten und mit der Vlies-Seite nach unten in einem Uhrglas mit der Harzzusammensetzung imprägniert. Dazu wurden die Harze gelegeseitig (also von oben) auf den Liner gegossen und im Harz befindliche Luftblasen mit einem Holzspatel ausgetrieben. Die Imprägnierung war abgeschlossen, wenn das Vlies auf der Unterseite vollständig mit Harz getränkt war.

Anschließend wurden die mit Harzzusammensetzung imprägnierten Liner-Prüflinge mit UV Licht gehärtet.

Zur Bestimmung der Glasübergangstemperaturen wurden die gehärteten Liner-Prüflinge an einer Kreissäge auf 50 mm x 10 mm zurechtgeschnitten und mit einem Handschleifgerät auf eine Dicke von 2 mm heruntergeschliffen.

Zur Prüfung der Hydrolysestabilität und Temperaturstabilität wurden die Prüfkörper bei 200 °C und bei einem Druck von 5 bar eine Woche in Wasser gelagert. Es wurden keine hydrolytischen Effekte beobachtet. Die Glasübergangstemperatur wurde je nach Prüfkörper und Charge auf etwa 210 °C bis 240 °C bestimmt. Es wurde beobachtet, dass die Glasübergangstemperatur nach der Einlagerung in Wasser sogar zugenommen hat, was für eine Nachhärtung spricht. Die Prüfkörper zeigten keine Auffälligkeit in Bezug auf die Biegsamkeit, lokale Aushärtungen, Farbveränderungen oder eine Gasentwicklung. Hinweise auf hydrolytische Schädigung des Netzwerkes waren nicht zu erkennen.

Anschließend erfolgte eine Messung in der DMA (Dynamisch-mechanischen Analyse) zur Bestimmung der Glasübergangstemperatur.

Parameter und Messeinstellungen bei den durchgeführten DMA-Analysen:
Probenabmessungen: 50 x 10 x 5 mm
Deformationsmodus: Zweiarmige Biegung
Amplitude: 30 µm
Dynamische Kraft: 7,55 N
Statische Kraft: 4 N
Temperaturbereich: 20 - 160 °C
Heizrate: 2 K/min
Frequenz: 1 Hz / 10 Hz
Atmosphäre: N₂
Flussrate N₂ : 5 ml/min

Die DMA Messung wurde jeweils nach einer gewissen Zeit der Lagerung des Prüfkörper bei 200 °C-Autoklav-Lagerung in Wasser durchgeführt. Die folgende Tabelle gibt die Glasübergangstemperatur der Prüflinge nach der jeweiligen Lagerungszeit an.

| Lagerungszeit | Glasübergangstemperatur |
|---|---|
| 0h | 225 °C |
| 168h | 238 °C |
| 312h | 241 °C |
| 480h | 240 °C |
| 840h | 242 °C |
| 1032h | 242 °C |

Man konnte die Nachhärtung erkennen, die das Duromer bei 200 °C in den ersten 168 h erfährt. Ebenso sah man, dass die Glastemperatur von 312 h bis 1032 h konstant bleibt - d.h. es trat weder thermischer noch hydrolytischer Netzwerkabbau auf.

Für die Herstellung des erfindungsgemäßen imprägnierten Faserschlauchs (Liner) wurde eine 0,47 m breite und 12 m lange Trockenware, bestehend aus einem 2 mm Innenliner und einem 2 mm Außenliner verwendet (handelsüblicher S-Liner von Saertex). Im Inneren der Trockenware befand sich eine 500 µm dicke Innenbeschichtung, bestehend aus einer Kombination aus PP / PA und PP Vlies. Diese Trockenware wurde anschließend mit 35 kg der oben hergestellten Harzzusammensetzung unter Vakuum imprägniert.

Dieser Liner wurde in ein Testrohr mit einem Innendurchmesser von 300 mm mit üblichen Techniken eingezogen und mit UV Licht ausgehärtet.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

## Patentansprüche

1. Hochtemperaturliner aus mehreren Schichten, wobei eine Faserschicht Fasern enthält, die vor der Aushärtung mit einer Harzzusammensetzung getränkt worden sind, wobei eine Innenbeschichtung oder ein feuchtigkeitsabweisender Schlauch, die in der sanierten Hochtemperaturleitung mit dem ausgehärteten Hochtemperaturliner die abschließende Schicht in Richtung der Mittelachse der Hochtemperaturleitung bilden, eine Dicke in einem Bereich von 40 bis 2000 µm aufweisen.

2. Hochtemperaturliner gemäß Anspruch 1, **dadurch gekennzeichnet, dass** die Harzzusammensetzung einen Reaktivverdünner und einen ungesättigten Polyester enthält, der aus einer Polyester-Ausgangsmischung erhalten wurde.

3. Hochtemperaturliner gemäß Anspruch 2, **dadurch gekennzeichnet, dass** der ungesättigte Polyester ein ungesättigtes Polyesteramid ist.

4. Hochtemperaturliner gemäß einem der Ansprüche 1 bis 3, **dadurch gekennzeichnet, dass** die Innenbeschichtung eine Dicke in einem Bereich von 100 bis 700 µm aufweist.

5. Hochtemperaturliner gemäß einem der Ansprüche 1 bis 4, **dadurch gekennzeichnet, dass** der Hochtemperaturliner eine Längsnaht in Längsrichtung des Liners aufweist und diese besonders bevorzugt in der Innenbeschichtung und/oder einer Faserschicht vorgesehen ist.

6. Hochtemperaturliner gemäß einem der Ansprüche 1 bis 5, **dadurch gekennzeichnet, dass** die Innenbeschichtung oder der feuchtigkeitsabweisende Schlauch aus einer oder mehreren Lagen aufgebaut ist, und besonders bevorzugt wenigstens eine dieser Lagen zu wenigstens 20 Gew.% ein Material ausgewählt aus der Gruppe Polypropylen, Polymethylpenten, Polyethylen, vernetztes Polyethylen, Poly(organo)siloxane, Fluorpolymere, Fluorelastomere, Nitrilkautschuke, alipahtische Polyketone, Polyetherketone, Polyphenylensulfide, und/oder beliebige Mischungen derselben enthält.

7. Hochtemperaturliner gemäß einem der Ansprüche 1 bis 6, **dadurch gekennzeichnet, dass** zwischen der Innenbeschichtung und der Faserschicht eine Verankerungsschicht angeordnet ist, wobei die Dicke der Verankerungsschicht in einem Bereich von 10 bis 5000 µm liegt, wobei die Verankerungsschicht ein Vlies aus Glas, thermoplastischen Materialien, PAN, Metall, Carbonfasern oder Mischungen derselben enthält.

8. Sanierte Hochtemperaturleitung, **dadurch gekennzeichnet, dass** in der Hochtemperaturleitung ein ausgehärteter Hochtemperaturliner gemäß einem der Ansprüche 1 bis 7 angeordnet ist.

9. Verwendung des Hochtemperaturliners gemäß einem der Ansprüche 1 bis 7 zur Sanierung von Hochtemperaturleitungen.

10. Verfahren zum Sanieren von Hochtemperaturleitungen, **dadurch gekennzeichnet, dass** ein Hochtemperaturliner gemäß einem der Ansprüche 1 bis 7 in eine Hochtemperaturleitung eingebracht wird und dort ausgehärtet wird.
